# EUROPEAN PATENT SPECIFICATION

(11) **EP 1 713 632 B1**
(45) Date of publication and mention of the grant of the patent: **25.04.2007**
(21) Application number: 05707003.9
(22) Date of filing: 25.01.2005
(51) Int. Cl.: B29C 49/00, B32B 27/36

(54) **GLYCOLISED COPOLYESTER-BASED STRUCTURE FOR MANUFACTURING TRANSPARENT HOLLOW BODIES BY COEXTRUSION BLOW-MOLDING**
AUF GLYKIERTEM COPOLYESTER BASIERENDE STRUKTUR ZUR HERSTELLUNG VON DURCHSICHTIGEN HOHLKÖRPERN DURCH COEXTRUSIONSBLASFORMEN
STRUCTURE A BASE DE COPOLYESTERS POUR LA FABRICATION D'OBJETS CREUX TRANSPARENTS PAR COEXTRUSION SOUFFLAGE

(30) Priority: 26.01.2004 EP 04290204
(43) Date of publication of application: 25.10.2006
(73) Proprietor: Arkema France, 92800 Puteaux (FR); EASTMAN CHEMICAL COMPANY, Kingsport, TN 37662-5280 (US)
(72) Inventor: ROBERT, Patrice, F-27470 Serquigny (FR); PERBEN, Cédric, F-45140 Ingre (FR); GUGUMUS, Vincent, F-21000 Dijon (FR)
(74) Representative: Mouttet, Marie-Paule
(86) International application number: PCT/EP2005/000702
(87) International publication number: WO 2005/070652

(56) References cited:
- FR-A- 2 806 734
- GB-A- 2 113 696

## Description

The present invention relates to a multilayer structure comprising a coextrusion tie layer adhering to a layer of glycolised polyester copolymer. The said tie comprises a blend of metallocene polyethylene, abbreviated as PEm in the text herein below, non-metallocene LLDPE, both of which are co-grafted, and non-grafted polyethylene. The invention also relates to articles comprising such a structure, in particular hollow bodies.

In the current state of the art of coextrusion blow-molding, it is possible to obtain bottles with gas-barrier properties with structures comprising polypropylene layers, but these bottles are not sufficiently transparent. It is possible to obtain via another two-step process (a step of coinjection of preforms followed by a step of biaxial-drawing blow-molding) bottles with barrier properties manufactured with the aid of a multilayer structure comprising at least one polyester layer and at least one EVOH or PA-based layer, but in this case the cohesion of the structure is not very good since the adhesion between the polyester layer and the barrier layer is low.

Document FR 2806734 from the Applicant discloses a composition comprising metallocene PE and non-metallocene LLDPE co-grafted with unsaturated carboxylic acid or a derivative thereof, the said composition being diluted in PE or an elastomer. The PE in the said patent application may be a PE homopolymer or copolymer with, in this case, an α-olefin as comonomer, and it may be a PE such as an HDPE (high-density PE), LDPE (low-density PE), LLDPE (linear low-density PE) or VLDPE (very-low-density PE) or a metallocene PE.

The technical problem consists in manufacturing an article, in particular a bottle, which has good transparency and gas-barrier qualities, given that the prior-art solutions are at the present time unsatisfactory.

The Applicant has now found that it is possible to obtain, by extrusion blow-molding, hollow bodies with high transparency accompanied by gloss, combined with high impermeability to gases and having good mechanical properties, by using structures of the glycolised polyester copolymer/tie/EVOH type.

The tie, used in the invention, thus allows the production of varied structures comprising, inter alia, a tie layer, a glycolised copolyester layer and a layer of barrier material.

These structures are useful for manufacturing packagings or flexible or rigid hollow bodies such as sachets, bottles or containers, or for manufacturing coextruded pipes, tubes, films and sheets.

The invention concerns a process for manufacturing a transparent article with gas-barrier properties by coextrusion blow-molding, the said article comprising at least a structure of the type: layer of EVOH/tie layer/layer of glycolised copolyester.

According to one embodiment, the said article comprises at least a structure of the type: layer of EVOH/tie layer/layer of PETG as glycolised copolyester.

According to one embodiment, the tie is a composition comprising at least a PE homopolymer or copolymer grafted with a grafting monomer chosen from unsaturated carboxylic acids and derivatives thereof.

The invention concerns also a multilayer structure comprising at least:
■ one layer of coextrusion tie (L) comprising:
   - 5% to 35 % by weight of a polymer (A) which itself consists of a blend of 80% to 20% by weight of a metallocene polyethylene (A1) with a density of between 0.863 and 0.915 and from 20% to 80% by weight of a non-metallocene LLDPE polyethylene (A2) with a density of between 0.900 and 0.950, the blend of polymers (A1) and (A2) being co-grafted with a grafting monomer chosen from unsaturated carboxylic acids and derivatives thereof, the content of the grafting monomer in the said blend being between 30 and 100 000 ppm and preferably between 600 and 5000 ppm:
   - 95% to 65% by weight of polyethylene homopolymer or copolymer (B), the comonomer of which contains 3 to 20 carbon atoms and preferably 4 to 8 carbon atoms, the MFI, melt flow index measured under 2.16 kg at 190°C according to ASTM standard D1238, of which is between 0.5 and 30 and preferably between 3 and 15 g/10 minutes;
   the total being 100%, the blend of (A) and (B) being such that its MFI is between 0.1 and 15 and preferably between 1 and 13 g /10 minutes;
■ one layer of glycolised polyester copolymer (E).

According to one embodiment, the glycolised polyester copolymer is PETG.

According to one embodiment, the structure also comprises a layer of barrier material (F).

According to one embodiment, the structure is characterized in that the layer of barrier material is a layer of EVOH.

The invention is relating to an article comprising a structure above mentioned.

According to one embodiment, the article is characterized in that it is a bottle, a hollow body or a container.

The invention will now be described in detail.

As regards (A1), the term "metallocene polyethylene" denotes the polymers obtained by copolymerization of ethylene and of α-olefin containing from 3 to 30 carbon atoms and preferably from 3 to 8 carbon atoms, for instance propylene, butene, pentene, hexene or octene in the presence of a single-site catalyst.

Examples of α-olefins containing 3 to 30 carbon atoms, as possible comonomers, include propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene, 1-eicosene, 1-docosene, 1-tetracosene, 1-hexacosene, 1-octacosene and 1-triacontene. These α-olefins may be used alone or as a mixture of two or more than two.

A single-site catalyst generally consists of a metal atom, which may be, for example, zirconium or titanium, and of two cycloalkyl molecules linked to the metal. More specifically, metallocene catalysts are usually compounds of two cyclopentadiene rings linked to the metal. These catalysts are frequently used with aluminoxanes as cocatalysts or activators, preferably methylaluminoxane (MAO). Hafnium may also be used as the metal to which the cyclopentadiene is attached. Other metallocenes may include transitions metals from groups IV A, V A, and VI A. Metals of the lanthanide series may also be used.

These metallocene polyethylenes may also be characterized by their *M̅w̅*/*M̅n̅* ration < 3 and preferably < 2 in which *M̅w̅* and *M̅n̅* denote, respectively, the weight-average molar mass and the number-average molar mass. The term "metallocene polyethylene" also denotes those with an MFR (Melt Flow Ratio) of less than 6.53 and an *M̅w̅*/*M̅n̅* ratio of greater than MFR minus 4.63. MRF denotes the ratio of the MFI₁₀ (MFI under a 10 kg load) to the MFI₂ (MFI under a 2.16 kg load). Other metallocene polyethylenes are defined by an MFR of greater than or equal to 6.13 and an *M̅w̅*/*M̅n̅* ratio of less than or equal to MFR minus 4.63.

The density of (A1) is advantageously between 0.863 and 0.915. The MFI of the PEm (A1) is between 0.5 and 30 g/10 minutes (according to ASTM Standard D1238 at 190°C under 2.16 kg).

As regards (A2), the polymer (A2) is a copolymer of ethylene and of an α-olefin of LLDPE (linear low-density polyethylene) type and is not of metallocene type. α-Olefins advantageously contain from 3 to 30 carbon atoms. The list of these α-olefins has already been given above. They are preferably α-olefins containing from 3 to 8 carbon atoms.

The density of (A2) is advantageously between 0.900 and 0.950.

The MFI, or melt flow index, of (A2) is between 0.1 and 8 g/10 minutes (according to ASTM Standard D1238 at 190°C under 2.16 kg).

The blend of polymers (A1) and (A2) is grafted with a grafting monomer, i.e. the polymers (A1) and (A2) are co-grafted. The grafting monomer is chosen from unsaturated carboxylic acids or functional derivatives thereof.

Examples of unsaturated carboxylic acids are those containing 2 to 20 carbon atoms, such as acrylic acids, methacrylic acids, maleic acid, fumaric acid and itaconic acid. The functional derivatives of these unsaturated carboxylic acids comprise anhydrides, ester derivatives, amide derivatives, imide derivatives and metal salts (such as alkali metal salts) of these unsaturated carboxylic acids.

Unsaturated dicarboxylic acids containing 4 to 10 carbon atoms and functional derivatives thereof, particularly the anhydrides thereof, are grafting monomers that are particularly preferred.

These grafting monomers comprise, for example, maleic acid, fumaric acid, itaconic acid, citraconic acid, allylsuccinic acid, cyclohex-4-ene-1,2-dicarboxylic acid, 4-methylcyclohex-4-ene-1,2-dicarboxylic acid, bicyclo(2,2,1)hept-5-ene-2,3-dicarboxylic acid and x-methylbicyclo(2,2,1)hept-5-ene-2,3-dicarboxylic acid and the functional derivatives thereof, and maleic anhydride, itaconic anhydride, citraconic anhydride, allylsuccinic anhydride, cyclohex-4-ene-1,2-dicarboxylic acid, 4-methylenecyclohex-4-ene-1,2-dicarboxylic anhydride, bicyclo(2,2,1)hept-5-ene-2,3-dicarboxylic anhydride and x-methylbicyclo(2,2,1)hept-5-ene-2,2-dicarboxylic anhydride.

Examples of other grafting monomers comprise C₁-C₈ alkyl esters or glycidyl ester derivatives of unsaturated carboxylic acids, such as methyl acrylate, methyl methacrylate, ethyl acrylate, ethyl methacrylate, butyl acrylate, butyl methacrylate, glycidyl acrylate, glycidyl methacrylate, monoethyl maleate, diethyl maleate, monomethyl fumarate, dimethyl fumarate, monomethyl itaconate and diethyl itaconate; amide derivatives of unsaturated carboxylic acids, such as acrylamide, methacrylamide, maleic monoamide, maleic diamide, maleic N-monoethylamide, maleic N,N-diethylamide, maleic N-monobutylamide, maleic N,N-dibutylamide, fumaric monoamide, fumaric diamide, fumaric N-monoethylamide, fumaric N,N-diethylamide, fumaric N-monobutylamide and fumaric N,N-dibutylamide; imide derivatives of unsaturated carboxylic acids, such as maleimide, N-butylmaleimide and N-phenylmaleimide ; and metal salts of unsaturated carboxylic acids, such as sodium acrylate, sodium methacrylate, potassium acrylate, and potassium methacrylate. Maleic anhydride is preferred.

Various known processes may be used to graft a grafting monomer onto the blend of polymer (A1) and (A2). The blend may contain the additives usually used in the implementation of polyolefins, in contents of between 10 ppm and 50 000 ppm, such as antioxidants based on substituted phenolic molecules, UV stabilizers, processing agents such as fatty amides, stearic acid and its salts, fluoropolymers known as agents for preventing extrusion defects, amine-based anti-misting agents, antiblocking agents such as silica or talc, masterbatches with dyes and nucleating agents, inter alia.

For example, grafting may be performed by heating the polymers (A1) and (A2) to elevated temperature, about 150°C to about 300°C, in the presence or absence of a solvent, with or without a free-radical initiator. Suitable solvents that may be used in this reaction are benzene, toluene, xylene, chlorobenzene and cumene, inter alia. Suitable free-radical initiators that may be used include t-butyl hydroperoxide, cumene hydroperoxide, diisopropylbenzene hydroperoxide, di-t-butyl peroxide, t-butylcumyl peroxide, dicumyl peroxide, 1,3-bis(t-butylperoxyisopropyl)benzene, acetyl peroxide, benzoyl peroxide, isobutyryl peroxide, bis(3,5,5-trimethylhexanoyl) peroxide and methyl ethyl ketone peroxide.

In the blend of polymers (A1) and (A2) modified by grafting, obtained in the abovementioned manner, the amount of the grafting monomer may be chosen in an appropriate manner but is preferably from 0.01 to 10% by weight, i.e. preferably from 600 ppm to 5000 ppm, relative to the weight of the co-grafted (A1) and (A2).

The amount of the grafted monomer is determined by assaying the succinic functions by FTIR spectroscopy. The MFI, or the melt flow index, of (A), i.e. of the blend of (A1) and (A2) that have been co-grafted, is between 0.1 and 15 g/10 minutes (ASTM D 1238-190°C-2.16 kg), advantageously between 0.1 and 5 g/10 minutes and preferably between 0.1 and 3 g/10 minutes.

As regards the polyethylene (B), it is a polyethylene homopolymer or it may be chosen from copolymers of ethylene with a monomer chosen from α-olefins, unsaturated carboxylic acid esters and vinyl esters of saturated carboxylic acids. The α-olefins have been defined above. The unsaturated carboxylic acid esters are, for example, alkyl (meth)acrylates in which the alkyl contains from 1 to 24 carbon atoms. Examples of alkyl acrylates or methacrylates that may be used are especially methyl methacrylate, ethyl acrylate, n-butyl acrylate, isobutyl acrylate and 2-ethylhexyl acrylate. The vinyl esters of saturated carboxylic acids are, for example, vinyl acetate or vinyl propionate. (B) may be an HDPE, LDPE, LLDPE or VLDPE polyethylene or a metallocene.

The polymer (B) may also be a polymer of elastomeric nature, i.e. it may be (i) an elastomer within the meaning of ASTM D412, i.e. a material that can be drawn at room temperature to twice its width, maintained in this state for 5 minutes and then, when it is released, it returns to within 10% of its initial length, or (ii) a polymer that does not have exactly the above characteristics, but that can be drawn and return to substantially its initial length. Examples that may be mentioned include:
- EPRs (ethylene-propylene rubber also denoted as EPM) and EPDMs (ethylene-propylene-diene),
- styrene elastomers, such as SBR (styrene -butadiene-rubber), styrenebutadiene-styrene (SBS) block copolymers, styrene-ethylene/butene/styrene (SEBS) block copolymers and styrene-isoprene-styrene (SIS) blockcopolymers.

Advantageously, (B) is an LLDPE with a density between 0.910 and 0.935, an HDPE with a density between 0.935 and 0.950 or a polyethylene of metallocene type with a density between 0.863 and 0.915.

The multilayer structure of the present invention comprises a layer (L) comprising the tie described above and a layer (E) directly attached to a first side of the said layer (L). The layer (E) is a layer of glycolised polyester, advantageously a glycol-modified polyethylene terephthalate and more preferably PETG (poly)ethylene-co-1,4-cyclohexanedimethyleneterephthalate.

A layer (F) may also be directly attached to the second side of the layer (L), the layer (L) being sandwiched between the layers (E) and (F), the said layer (F) being either a layer of polymer chosen from the group of polyamides and saponified copolymers of ethylene and of vinyl acetate (EVOH).

However, the multilayer structure may also comprise a layer (L) comprising the tie sandwiched between two layers (F).

The following structures may be listed by way of example: PA denoting the polyamide, L the tie, PE the polyethylene, PETG [(poly)ethylene-co-1,4-cyclohexanedimethyleneterephthalate] the glycolised copolyester and EVOH the saponified copolymer of ethylene and of vinyl acetate:
■ Structures of (E) layer /(L) layer / (F) layer type: PE/L/EVOH/L/PETG
■ Structures of (E) / (L) layer / (E) layer and (F) layer / (L) layer / (F) layer type: PETG/L/PE, PETG/L/PETG

More specifically, the polyamides are synthetic with a long chain containing structural units of the amide group in the main chain, such as PA-6, PA-6,6, PA-6,10, PA-11, PA-6/6,6 and PA-12.

Saponified copolymers of ethylene and of vinyl acetate have a degree of saponification of about 90 mol% to 100 mol% and are obtained by saponifying an ethylene/vinyl acetate copolymer having an ethylene content of about from 15 mol% to about 60 mol%.

The glycolised polyesters are glycolised copolymers. Suitable glycolised copolyesters that are useful in the invention may be formed from aromatic dicarboxylic acids, from dicarboxylic acid esters, from dicarboxylic ester anhydrides and from glycols, or mixtures thereof.

Partially aromatic copolyesters formed from repeating units comprising terephthalic acid, dimethyl terephthalate, isophthalic acid, dimethyl isophthalate, dimethyl 2,6-naphthalenedicarboxylate, 2,6-naphthalenedicarboxylic acid, 1,2-, 1,3- and 1,4-phenylene dioxidoacetic acids, ethylene glycol, diethylene glycol, 1,4-cyclohexanedimethanol and 1,4-butanediol, or mixtures thereof, are also suitable.

For the diacid component, the structure of the polyesters preferably comprises repeating units comprising terephthalic acid, dimethyl terephthalate, isophthalic acid, dimethyl isophthalate, dimethyl 1,4-cyclohexanedicarboxylate and/or dimethyl 2,6-naphthalenedicarboxylate. The dicarboxylic acid of the polyester may be modified with one or more different dicarboxylic acids (preferably up to about 20 mol%). Such dicarboxylic acids comprise aromatic dicarboxylic acids preferably containing 8 to 14 carbon atoms, aliphatic dicarboxylic acids preferably containing 4 to 12 carbon atoms, or cycloaliphatic dicarboxylic acids preferably containing 8 to 12 carbon atoms. Examples of dicarboxylic acids are: terephthalic acid, phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid and sebacic acid, or mixtures thereof.

For the glycol component, the preferred glycols include ethylene glycol, diethylene glycol, neopentyl glycol, 1,4-cyclohexanedimethanol, and mixtures thereof. More preferably, the glycol residue component is from about 10 to 100 mole percent 1,4-cyclohexanedimethanol and from about 90 to 0 mole percent ethylene glycol. Furthermore, the glycol may be modified with one or more diols (preferably up to about 20 mol %). Such diols comprise: cycloaliphatic diols preferably containing 6 to 20 carbon atoms or aliphatic diols preferably containing 2 to 20 carbon atoms. Examples of such diols comprise: ethylene glycol, diethylene glycol, triethylene glycol, 1,4-cyclohexanedimethanol, 1,3-propanediol, 1,4-butanediol, 1,5-pentanediol, 1,6-hexanediol, 3-methyl-2,4-pentanediol, 2-methyl-1,4-pentanediol, 2,2,4-trimethyl-1,3-pentanediol, 2-ethyl-1,3-hexanediol, 2,2-diethyl-1,3-propanediol, 2,2-dimethyl-1,3-propanediol, 1,3-hexanediol, 1,4-bis(hydroxyethoxy)benzene, 2,2-bis(4-hydroxycyclohexyl)propane, 2,4-dihydroxy-1,1,3,3-tetramethylcyclobutane, 2,2-bis(3-hydroxyethoxyphenyl)propane, 2-bis(4-hydroxypropoxyphenyl)propane and hydroxyethylresorcinol, or mixtures thereof. The glycolised polyesters may be prepared with two or more than two of the above diols.

In addition, the glycolised copolyesters of this invention may include branching agents such as trimellitic acid, trimellitic anhydride, pyromellitic dianhydride, trimethylolpropane, glycerol, pentaerythritol, and the like.

Advantageously, the glycolised polyester is formed from terephtalic acid, ethylene glycol and another diol such as defined above. More preferably, the glycolised polyester is PETG [(poly)ethylene-co-1,4-cyclohexanedimethyleneterephthalate] which is formed from terephtalic acid, ethylene glycol and 1,4-cyclohexanedimethanol.

The inherent viscosity of the glycolised copolyesters generally ranges from about 0.4 to about 1.5 dL/g, preferably about 0.6 to about 1.2 dL/g. Inherent viscosity (I.V.) as used herein refers to determinations made at 25°C using 0.25 gram of polymer per 100 mL of a solvent composed of 60 weight percent phenol and 40 weight percent tetrachloroethane.

The compositions forming the various layers of the structures of the invention may contain additives such as fillers, stabilizers, glidants, antistatic agents and flame retardants.

The structures of the invention are manufactured by the known process of coextrusion blow-molding.

**Table 1** below collates the composition of the ties of Examples 1 to 3.

**Table 2** below collates the peel forces F in N/15 mm at various interfaces.

The peel tests were performed using the so-called T peel test at a temperature T of 25°C and at a peel rate of 200 mm/minute.

Haze values measured on samples cutted in glycolised copolyester based containers from examples 1 to 3 and polypropylene based container from comparative example 4 are collected in **Table 3**.

The containers of the present invention have good transparency, which is characterized by a low haze value, less than 20%, advantageously less than 15% and more advantageously less than 13%. A haze value is defined as the percent of total light which, in passing through the specimen, deviates through forward scatter by more than 0.044 red (2.5°) on the average. The preferred test to obtain the haze value of the bottle is ASTM Method D-1003 as defined in the 1995 Annual Book of ASTM 10 Standards, Volume 8.01.

**In the examples 1 to 3,** 5-layers containers were made by a coextrusion blow molding process using a BEKUM with 5 extruders equipment. The layers I and V were made from a glycolised copolyester extruded in two single screw extruders of respectively 50mm and 38mm diameter. The layers II and IV were made from tie layer material and extruded in two single screw extruder of 20mm diameter. Layer III was made from EVOH and extruded in a single screw of 30mm diameter. The five layers were extruded together in a coextrusion annular die having a final temperature of 220°C to form a continuous tube (called parison). Then pressurized air was used to expand the hot preform and press it against a female mold cavity to form the container. The pressure was held until the materials were cooled. The layers **I and V** were made from a glycolised copolyester (50 mole % of copolymer of terephatalate residues with 25 mole % of 1,4-cyclohexanedimethanol and 25 mole % of ethylene glycol and with an inherent viscosity (I.V.) of 0,76 dL/g). The layer III was made from EVOH (SOARNOL DT 2903 from Nippon Gohsei). The layers II and IV were made from ties (L) defined below.

In the comparative example 4, 5-layers container was made by a coextrusion blow molding process using the same process as those used in examples 1 to 3. The layers **I and V** were made from Polypropylene (ATOFINA POLYPROPYLENE PPM R020). The layer III was made from EVOH (SOARNOL DT 2903 from Nippon Gohsei). The layers II and IV were made from tie layer OREVAC PPC from ATOFINA.

The specimens used for peeling tests were cut from coextruded hollow bodies consisting of 5 layers (layers I to V), obtained by coextrusion blow-molding: layer (I) of glycolised copolyester / layer (II) of Tie (L) / layer (III) of EVOH / layer (IV) of tie (L) / layer (V) of glycolised copolyester, with respective thicknesses of layer (I) to layer (V), in µm, of 385/19/41/19/153 for case 1, 470/25/51/17/175 for case 2 and 548/25/56/20/210 for case 3.

The specimen used for comparative example 4 was cut from coextruded hollow bodies consisting of 5 layers (layers I to V), obtained by coextrusion blow-molding: layer (I) of Polypropylene / layer (II) of Tie (L) / layer (III) of EVOH / layer (IV) of tie (L) / layer (V) of Polypropylene, with respective thicknesses of layer (I) to layer (V), in µm, of 390/20/40/20/162.

**Table 1**

| | | **Ex 1** | | **Ex 2** | | **Ex 3** | |
|---|---|---|---|---|---|---|---|
| Characteristics of the co-grafted polymer (A) | Type of PE | PEm | LLDPE | PEm | LLDPE | PEm | LLDPE |
| | Density (g/cm³) | 0.87 | 0.92 | 0.87 | 0.92 | 0.87 | 0.92 |
| | Comonomer | 1-octene | 1-butene | 1-octene | 1-butene | 1-octene | 1-butene |
| | Composition | 50% | 50% | 50% | 50% | 50% | 50% |
| | Degree of grafting | 0.9% | | 0.9% | | 0.9% | |
| | Grafting monomer | MAH | | MAH | | MAH | |
| | MFI (g/10 min) | 0.7 | | 0.7 | | 0.7 | |
| | 190°C - 2.16 kg | | | | | | |
| **Proportion of (A)** | | 25% | | 25% | | 25% | |
| Characteristics of the polymer (B) | Type of PE | E/Me acrylate | | E/1-octene | | E/Me acrylate | |
| | Density (g/cm³) | 0.943 | | 0.902 | | 0.945 | |
| | MFI (g/10 min) | 8 | | 10 | | 0.5 | |
| | 190°C-2.16 kg | | | | | | |
| **Proportion of (B)** | | 75% | | 75% | | 75% | |
| **MFI of the blend (A) and (B)** | | 5 | | 4.5 | | 0.5 | |

**Table 2**

| | CASE 1 | CASE 2 | CASE 3 |
|---|---|---|---|
| | F | F | F |
| | in N/15 mm | in N/15 mm | in N/15 mm |
| **Ex 1** | 21.8⁽¹⁾ and 8.9⁽²⁾ | - | - |
| **Ex 2** | - | 21.5⁽³⁾ and 18.5⁽²⁾ | - |
| **Ex 3** | - | - | 33⁽³⁾ and 15-23⁽²⁾ |

| | | | |
|---|---|---|---|
| ⁽¹⁾ failure between layer (II) and layer (III) ⁽²⁾ failure between layer (III) and layer (IV) ⁽³⁾ failure between layer (I) and layer (II) | | | |

**Table 3**

| | Ex.2 | Ex.3 | Comparative Ex.4 |
|---|---|---|---|
| Haze (%) | 10 | 13 | 24 |

## Claims

1. Process for manufacturing a transparent article with gas-barrier properties by coextrusion blow-molding, the said article comprising at least a structure of the type: layer of EVOH/tie layer/layer of glycolised copolyester.

2. Process according to claim 1, wherein the said article comprises at least a structure of the type: layer of EVOH/tie layer/layer of PETG as glycolised copolyester.

3. Process according to claim 1 or 2 in which the tie is a composition comprising at least a PE homopolymer or copolymer grafted with a grafting monomer chosen from unsaturated carboxylic acids and derivatives thereof.

4. Multilayer structure comprising at least:
• one layer of coextrusion tie (L) comprising:
- 5% to 35 % by weight of a polymer (A) which itself consists of a blend of 80% to 20% by weight of a metallocene polyethylene (A1) with a density of between 0.863 and 0.915 and from 20% to 80% by weight of a non-metallocene LLDPE polyethylene (A2) with a density of between 0.900 and 0.950, the blend of polymers (A1) and (A2) being co-grafted with a grafting monomer chosen from unsaturated carboxylic acids and derivatives thereof, the content of the grafting monomer in the said blend being between 30 and 100 000 ppm and preferably between 600 and 5000 ppm:
- 95% to 65% by weight of polyethylene homopolymer or copolymer (B), the comonomer of which contains 3 to 20 carbon atoms and preferably 4 to 8 carbon atoms, the MFI, melt flow index measured under 2.16 kg at 190°C according to ASTM standard D1238, of which is between 0.5 and 30 and preferably between 3 and 15 g/10 minutes;
the total being 100%, the blend of (A) and (B) being such that its MFI is between 0.1 and 15 and preferably between 1 and 13 g /10 minutes;
• one layer of glycolised polyester copolymer (E).

5. Structure according to Claim 4, wherein glycolised polyester copolymer is PETG.

6. Structure according to Claim 4 or 5, also comprising a layer of barrier material (F).

7. Structure according to Claim 6, **characterized in that** the layer of barrier material is a layer of EVOH.

8. Article comprising a structure according to one of Claims 4 to 7.

9. Article according to Claim 8, **characterized in that** it is a bottle, a hollow body or a container.

## Patentansprüche

1. Verfahren zur Herstellung eines durchsichtigen Gegenstandes mit Gasbarriere-Eigenschaften durch Coextrusionsblasformen, wobei der Gegenstand mindestens eine Struktur des Typs: Schicht aus EVOH/Haftschicht/Schicht aus glykiertem Copolyester umfasst.

2. Verfahren nach Anspruch 1, wobei der Gegenstand mindestens eine Struktur des Typs: Schicht aus EVOH/Haftschicht/Schicht aus PETG als glykierten Copolyester umfasst.

3. Verfahren nach Anspruch 1 oder 2, in welchem der Haftvermittler eine Verbindung ist, umfassend mindestens ein PE-Homopolymer oder -Copolymer verbunden mit einem Pfropfmonomer ausgewählt aus ungesättigten Carbonsäuren und deren Derivaten.

4. Mehrschichtstruktur umfassend mindestens:
• Eine Schicht Coextrusionshaftvermittler (L) umfassend:
- 5 bis 35 Gew.-% von einem Polymer (A), das selbst aus einer Mischung von 80 bis 20 Gew.-% aus einem Metallocen-Polyethylen (A1) mit einer Dichte von zwischen 0,863 und 0,915 und von 20 bis 80 Gew.-% aus einem Nichtmetallocen-LLDPE-Polyethylen (A2) mit einer Dichte von zwischen 0,900 und 0,950 besteht, wobei die Mischung der Polymere (A1) und (A2) miteinander verbunden ist mit einem Pfropfmonomer, ausgewählt aus ungesättigten Carbonsäuren und deren Derivaten, der Gehalt des Pfropfmonomers in der Mischung zwischen 30 und 100000 ppm und vorzugsweise zwischen 600 und 5000 ppm liegt:
- 95 bis 65 Gew.-% des Polyethylen-Homopolymers oder -Copolymers (B), wobei das Comonomer hiervon 3 bis 20 Kohlenstoffatome und vorzugsweise 4 bis 8 Kohlenstoffatome enthält, der MFI, der Schmelzflussindex gemessen unter 2,16 kg bei 190°C gemäß dem ASTM-Standard D1238, hiervon zwischen 0,5 und 30 und vorzugsweise zwischen 3 und 15 g/ 10 Minuten ist;
wobei das Gesamte 100% ist, die Mischung aus (A) und (B) so gewählt ist, dass ihr MFI zwischen 0,1 und 15 und vorzugsweise zwischen 1 und 13 g/ 10 Minuten ist;
• Eine Schicht aus glykiertem Polyester-Copolymer (E).

5. Struktur nach Anspruch 4, wobei das glykierte Polyester-Copolymer PETG ist.

6. Struktur nach Anspruch 4 oder 5, auch eine Schicht aus Barrierematerial (F) umfassend.

7. Struktur nach Anspruch 6, **dadurch gekennzeichnet, dass** die Schicht aus Barrierematerial eine Schicht aus EVOH ist.

8. Gegenstand umfassend eine Struktur nach einem der Ansprüche 4 bis 7.

9. Gegenstand nach Anspruch 8, **dadurch gekennzeichnet, dass** er eine Flasche, ein Hohlkörper oder ein Behälter ist.

## Revendications

1. Procédé pour la production d'un objet transparent avec des propriétés de barrière aux gaz par moulage par soufflage avec coextrusion, ledit objet comprenant au moins une structure du type : couche d'EVOH/couche de liaison/couche de copolyester glycolisé.

2. Procédé selon la revendication 1, dans lequel ledit objet comprend au moins une structure du type : couche d'EVOH/couche de liaison/couche de PETG comme copolyester glycolisé.

3. Procédé selon la revendication 1 ou 2 dans lequel la liaison est une composition comprenant au moins un homopolymère ou un copolymère de PE greffé avec un monomère de greffage choisi parmi les acides carboxyliques insaturés et les dérivés de ceux-ci.

4. Structure multicouche comprenant au moins :
• une couche de liaison coextrudée (L) comprenant :
- 5% à 35% en poids d'un polymère (A) qui est à son tour constitué par un mélange de 80% à 20% en poids d'un polyéthylène métallocène (A1) présentant une densité entre 0,863 et 0,915 et de 20% à 80% en poids d'un polyéthylène LLDPE non métallocène (A2) présentant une densité entre 0,900 et 0,950, le mélange des polymères (A1) et (A2) étant co-greffé avec un monomère de greffage choisi parmi les acides carboxyliques insaturés et les dérivés de ceux-ci, la teneur en monomère de greffage dans ledit mélange étant comprise entre 30 et 100 000 ppm et de préférence entre 600 et 5 000 ppm ;
- 95% à 65% en poids d'homopolymère de polyéthylène ou de copolymère de polyéthylène (B), dont le comonomère contient 3 à 20 atomes de carbone et de préférence 4 à 8 atomes de carbone, dont le MFI, l'indice de fusion mesuré sous 2, 16 kg à 190°C selon la norme ASTM D1238, est situé entre 0,5 et 30 et de préférence entre 3 et 15 g/10 minutes ;
l'ensemble étant égal à 100%, le mélange de (A) et de (B) étant tel que son MFI est situé entre 0,1 et 15 et de préférence entre 1 et 13 g/10 minutes ;
• une couche de copolymère de polyester glycolisé (E).

5. Structure selon la revendication 4, dans laquelle le copolymère de polyester glycolisé est le PETG.

6. Structure selon la revendication 4 ou 5, comprenant également une couche d'un matériau formant une barrière (F).

7. Structure selon la revendication 6, **caractérisée en ce que** la couche du matériau formant une barrière est une couche d'EVOH.

8. Objet comprenant une structure selon l'une quelconque des revendications 4 à 7.

9. Objet selon la revendication 8, **caractérisé en ce qu'**il s'agit d'une bouteille, d'un corps creux ou d'un conteneur.
